# EUROPÄISCHE PATENTSCHRIFT

(11) **EP 2 164 782 B1**
(45) Veröffentlichungstag und Bekanntmachung des Hinweises auf die Patenterteilung: **04.05.2011**
(21) Anmeldenummer: 08749422.5
(22) Anmeldetag: 09.05.2008
(51) Int. Cl.: B65G 13/06, B64D 9/00

(54) **VORRICHTUNG ZUM TRANSPORTIEREN VON FRACHTGUT**
DEVICE FOR TRANSPORTING FREIGHT
DISPOSITIF DE TRANSPORT DE FRET

(30) Priorität: 21.05.2007 DE 102007023834
(43) Veröffentlichungstag der Anmeldung: 24.03.2010
(73) Patentinhaber: Wittenstein AG, 97999 Igersheim (DE)
(72) Erfinder: ECK, Alexander, 97957 Poppenhausen (DE); SPINNER, Markus, 97999 Igersheim (DE)
(74) Vertreter: Weiss, Peter
(86) Internationale Anmeldenummer: PCT/EP2008/003754
(87) Internationale Veröffentlichungsnummer: WO 2008/141739

(56) Entgegenhaltungen:
- EP-A- 0 355 251
- DE-A1- 4 102 423
- DE-A1-102005 030 058
- US-A- 3 698 539

## Beschreibung

Die vorliegende Erfindung betrifft eine Vorrichtung zum Transportieren von Frachtgut, nach dem Oberbegriff der Ansprüche 1 und 5.

### STAND DER TECHNIK

Herkömmliche Vorrichtungen zum Transportieren von Frachtgut werden im üblichen als Power Drive Unit's (PDU) bezeichnet und dienen dem aktiven und/oder passiven Transport von Frachtcontainern in Frachträumen von Flugzeugen.

Derartige Vorrichtungen unterliegen nicht nur strengen Anforderungen im Luftfahrtbereich, da sie sehr hohe Lasten aufnehmen müssen, sondern müssen zuverlässig arbeiten.

Insbesondere deren Antriebsrolle, bei aktiv angetriebener Ausführung, unterliegt einem sehr hohen Verschleiss, da diese an ihrer äusseren Oberfläche und Mantelfläche mit einer Beschichtung, Gummierung od. dgl. versehen istd, um reibschlüssig das Frachtgut, insbesondere die Frachtcontainer zu transportieren.

Herkömmliche PDUs weisen Antriebsrollen auf, deren Antriebe abgeflanscht werden müssen, um die eigentliche Antriebsrolle herausnehmen zu können, was unerwünscht ist.

Ferner steht ein Einbauraum für die Antriebseinheit nicht zur Verfügung, da die seitlichen Lagerungen die einfache Demontage behindern.

### AUFGABE

Der vorliegenden Erfindung liegt die Aufgabe zugrunde, eine Vorrichtung der eingangs genannten Art zu schaffen, welche die genannten Nachteile beseitigt und bei welcher sehr schnell auf einfache und kostengünstige Weise die Antriebsrolle ausgetauscht werden kann. Zudem soll die Konstruktion kostengünstig herzustellen sein. Ferner soll eine Integration des Antriebs in die Antriebsrolle bei gleichzeitig schnellem Wechsel bzw. Austausch der Antriebsrolle möglich sein.

### LÖSUNG DER AUFGABE

Zur Lösung dieser Aufgabe führen die Merkmale der Kennzeichen der Patentansprüche 1 und 5.

Bei der vorliegenden Erfindung hat sich als besonders vorteilhaft erwiesen, die eigentliche Antriebswalze verschwenkbar, insbesondere klappbar oder gelenkartig gegenüber einem Rahmen, insbesondere einem seitlichen Rahmenteil zu lagern.

In der eigentlichen Antriebswalze ist ein Antrieb, insbesondere ein Elektromotor, und/oder eine Getriebeeinheit integriert.

Dabei ist besonders von Vorteil bei der vorliegenden Erfindung, dass die Antriebsrolle koaxial und hülsenartig auf die eigentliche Antriebswalze aufsteckbar ist.

Endseits der Antriebsrolle, welche die äussere Beschichtung, Ummantelung, Gummierung od. dgl. aufweist, um Frachtcontainer reibschlüssig zu transportieren, sitzt ein Lagerelement, welches in eine entsprechende Lagermulde bzw. Auflager des gegenüberliegenden seitlichen Rahmenteiles eingreift.

Durch entsprechendes Hochklappen und Herausklappen der Einheit, bestehend aus Antriebswalze und Antriebsrolle, lässt sich dann die Antriebsrolle axial von der Antriebswalze abziehen, um diese zur Reparatur oder zum Ersatz auszutauschen.

Auf diese Weise muss lediglich die Antriebswalze mit aufgesetzter Antriebsrolle nach oben um eine Lagerung des seitlichen Rahmenteiles verschwenkt werden. Dann kann die entsprechende Antriebsrolle axial abgezogen werden.

Ein entsprechendes Aufschieben einer reparierten oder neuen Antriebsrolle mit entsprechendem ggf. ausgetauschtem Lagerelement erfolgt in umgekehrter Reihenfolge sehr schnell, zeit- und kostensparend, da es auch im Betrieb des Flugzeuges durchgeführt werden kann.

Dies soll ebenfalls im Rahmen der vorliegenden Erfindung liegen.

In einem weiteren Ausführungsbeispiel der Erfindung lassen sich seitliche Hilfsrahmen gegenüber dem eigentlichen Rahmen nach oben verschwenken, wobei stirnseitig eine Antriebswalze an einen Hilfsrahmen fest anschliesst und dort gelagert ist und anderenends stirnseitig sich in vorgeschriebener Weise eine Antriebsrolle koaxial hülsenartig aufstecken oder aufschieben lässt. Diese ist dann über entsprechende Hilfsrahmen gelagert, wobei eine Lageraufnahme mit angesetztem Lagerelement um ein Gelenk herausklappbar, insbesondere aus dem stirnseitigen Bereich herausverschwenkbar ist, um zum Austausch und zur Demontage oder zu Montagezwecken die Antriebsrolle von der Antriebswalze axial abzuziehen oder aufzustecken. Auch hier lässt sich sehr schnell, kostengünstig und einfach die Antriebsrolle von der Antriebswalze entfernen bzw. austauschen.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a eine perspektivische Ansicht auf eine Vorrichtung zum Transportieren von Frachtgut, insbesondere PDU;
Figur 1b eine perspektivische Ansicht der Vorrichtung gemäss Figur 1a in einer möglichen Montagelage;
Figur 1c eine perspektivische Ansicht auf die Vorrichtung gemäss den Figuren 1a und 1b in einer anderen Montagelage;
Figur 2a eine perspektivische Seitenansicht eines weiteren Ausführungsbeispiels einer Vorrichtung zum Transportieren von Frachtgut, insbesondere PDU in einer ausgefahrenen Position;
Figur 2b eine perspektivische Ansicht der Vorrichtung gemäss Figur 2a in einer weiteren Montagelage;
Figur 2c eine perspektivische dargestellte Ansicht der Vorrichtung gemäss den Figuren 2a und 2b in einer weiteren Montagelage.

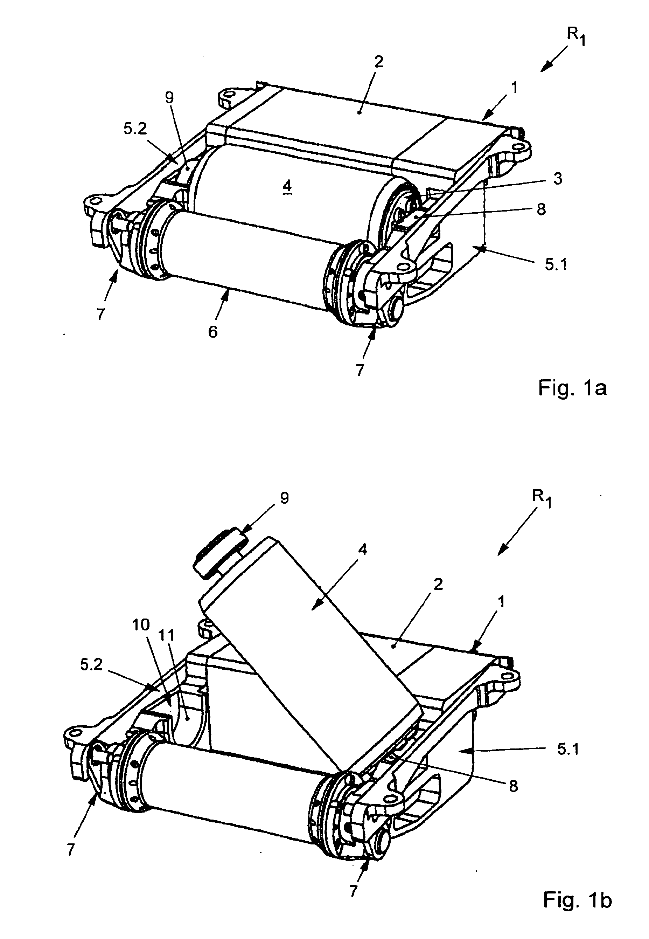

Gemäss Figur 1a weist eine erfindungsgemässe Vorrichtung R₁ zum Transportieren von Frachtgut, insbesondere von Frachtcontainern in Frachträumen von Flugzeugen, insbesondere Power Drive Unit (PDU) genannt, einen Rahmen 1 auf, welcher gehäuseartig ausgebildet ist.

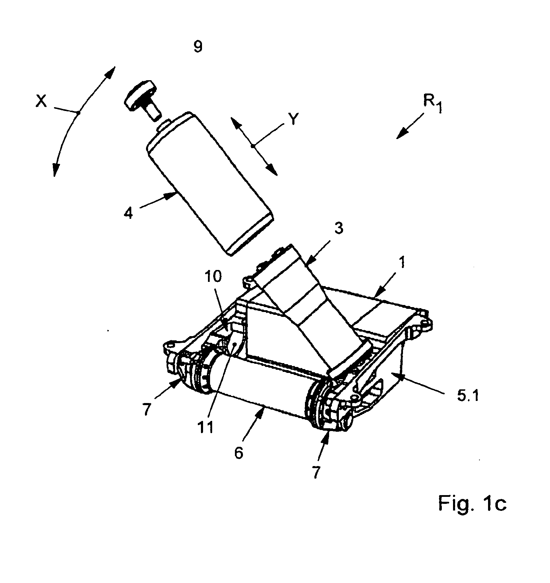

Im Rahmen 1 ist integriert eine Steuerung 2 zur Ansteuerung einer Antriebswalze 3, wie sie näher in Figur 1c ersichtlich ist.

In der Antriebswalze 3 sind hier nicht näher dargestellte Antriebe, Motor- und/oder Getriebeeinheiten integriert eingesetzt und treiben rotativ eine auf die Antriebswalze 3 koaxial aufgesetzte Antriebsrolle 4 an.

Die Antriebsrolle 4 ist hülsenartig ausgebildet und aussen mit einer Beschichtung, Gummierung od. dgl. versehen.

Dabei lässt sich die Antriebsrolle 4 verdrehfest mit der Antriebswalze 3 verbinden, so dass eine rotative Antriebsbewegung der Antriebswalze 3 auf die Antriebsrolle 4 direkt übertragbar ist.

An den Rahmen 1 schliessen seitliche Rahmenteile 5.1, 5.2 an, zwischen welchen die Antriebswalze 3 mit koaxial aufgesetzter Antriebsrolle 4 gelagert ist.

Ferner schliesst endseits der seitlichen Rahmenteile 5.1, 5.2 eine Lifteinheit 6 mit hier nicht dargestelltem und integriertem Antrieb an, um über entsprechende jeweils seitlich abragende Exzenter 7 den Rahmen 1, insbesondere die Antriebswalze 3 und Antriebsrolle 4 in bekannter Weise nach oben auszufahren, um ein Frachtgut, insbesondere ein Frachtcontainer über die angetriebene Antriebsrolle 4 zu befördern und zu transportieren.

Die Antriebsrolle 4 sowie auch deren Lagerelement 9 unterliegen einem gewissen Verschleiss, so dass diese häufig ausgetauscht werden müssen.

Damit nicht die vollständige Vorrichtung R₁ aus dem Flugzeug ausgebaut werden muss, hat es sich bei der vorliegenden Erfindung als besonders vorteilhaft erwiesen, die Antriebswalze 3 mit koaxial aufgesetzter Antriebsrolle 4 gegenüber dem Rahmenteil 5.1 verschwenkbar, insbesondere klappbar zu lagern.

Dabei lässt sich bei der vorliegenden Erfindung die Antriebswalze 3 mit aufgesetzter Antriebsrolle 4 über eine Lagerung 8, wie es in Figur 1b und 1c dargestellt und durch den Doppelpfeil X angedeutet ist, um eine Längsachse des Rahmenteils 5.1 nach oben herausschwenken. Endsseits der Antriebsrolle 4 schliesst das Lagerelement 9 an, welches aus einer nach oben geöffneten Lagermulde 10 des Rahmenteiles 5.2, die ein halbschalenartiges Auflager 11 bildet, herausschwenkbar ist.

Bei Druckbeaufschlagung bspw. mittels eines Frachtcontainers wird die Antriebsrolle 4, wie es in Figur 1a dargestellt ist, einends über das Lagerelement 9 im Auflager 11 der Lagermulde 10 des seitlichen Rahmenteils 5.2 gelagert und gehalten.

Zum Wechseln der Antriebsrolle 4 lässt sich diese nach dem Ausklappen von der Antriebswalze 3, wie in Figur 1c angedeutet, in dargestellter Y-Richtung abziehen, wobei ggf. eine Verdrehsicherung gelöst oder entfernt wird.

Dann lässt sich bspw. eine neue Antriebsrolle 4 koaxial auf die Antriebswalze 3 ggf. mit neuem Lagerelement 9 axial aufschieben. Nach entsprechendem Einklappen und Einlegen der Antriebswalze 3 bzw. der Antriebsrolle 4 mit Lagerelement 9 in die Lagermulde 10 ist die Vorrichtung R₁ wieder einsatzbereit.

Ein Wechsel der Antriebsrolle 4 erfolgt sehr schnell und kann ohne Ausbau der vollständigen Vorrichtung R₁ durchgeführt werden.

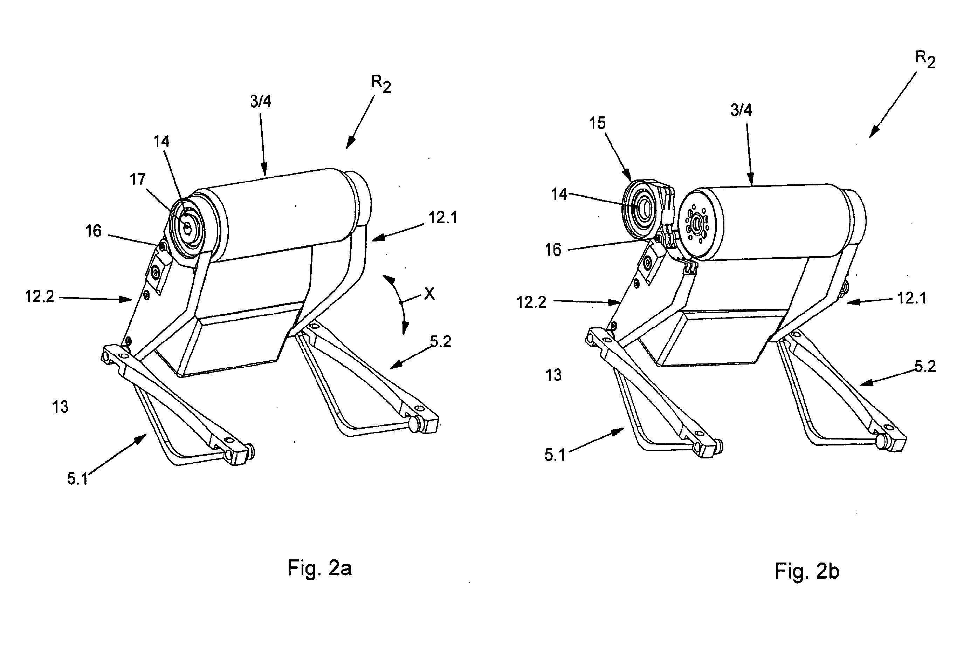

Im Ausführungsbeispiel der vorliegenden Erfindung gemäss Figur 2a ist eine Vorrichtung R₂ aufgezeigt, bei welcher der Rahmen aus seitlichen Rahmenteilen 5.1, 5.2 gebildet ist, wobei jeweils innerhalb eines seitlichen Rahmenteils 5.1, 5.2 ein seitlicher Hilfsrahmen 12.1, 12.2 in einer dargestellten X-Richtung nach oben heraussschwenkbar ist.

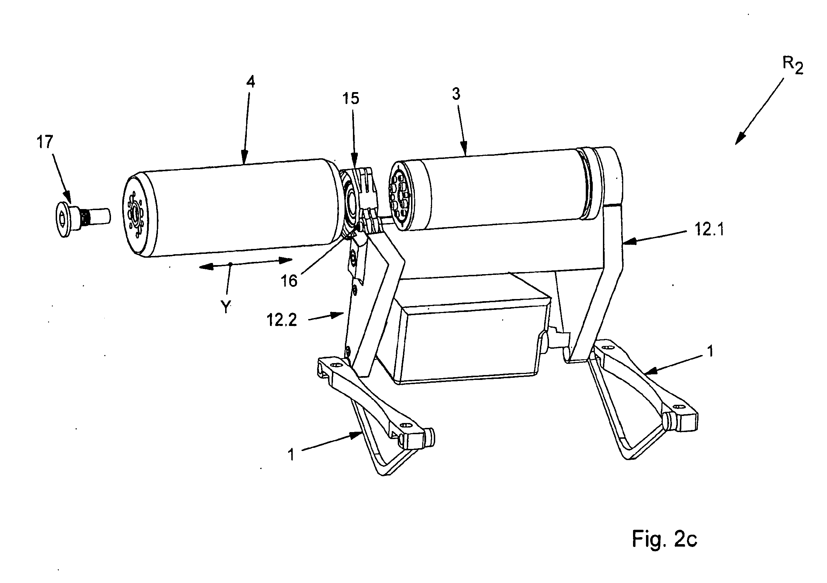

Dabei sitzt, insbesondere wie es im Ausführungsbeispiel der vorliegenden Erfindung gemäss Figur 2c ausgebildet ist, endseits dem Hilfsrahmen 12.1 die Antriebswalze 3 mit integriertem elektrischen Antrieb als Motor und/oder Getriebeeinheit stirnseitig an.

Auf der Antriebswalze 3 sitzt koaxial in oben beschriebener Weise die Antriebsrolle 4 auf und ist vorzugsweise verdrehfest mit der Antriebswalze 3 verbunden.

Aussen ist die Antriebsrolle 4 mit einer Beschichtung, Gummierung od. dgl. versehen, die direkt mit einem transportierenden Frachtgut, insbesondere Frachtcontainer in Berührung gelangt.

Die Antriebsrolle 4 ist über ein Lagerelement 14 am Hilfsrahmen 12.2 abgestützt und gelagert.

Dabei hat sich als besonders vorteilhaft bei der vorliegenden Erfindung erwiesen, dass eine Lageraufnahme 15 verschwenkbar, insbesondere um ein Gelenk 16 klappbar, aus dem stirnseitigen Bereich der Antriebsrolle 4 nach Entfernen einer Haltewelle 17 bewegbar ist.

Wie es in Figur 2c dargestellt ist, lässt sich nach dem Herausklappen des Hilfsrahmens 12.1, 12.2 aus dem Rahmen die Haltewelle 17 aus der Antriebsrolle 4 und der Lageraufnahme 15 bzw. aus dem Lagerelement 14 entnehmen, wonach ein anschliessendes Wegklappen bzw. ein Herausschwenken der Lageraufnahme 15 mit eingesetztem Lager 14, wie es in Figur 2b dargestellt ist, möglich ist, um anschliessend gemäss dem Ausführungsbeispiel nach Figur 2c in dargestellte Doppelpfeilrichtung Y die Antriebsrolle 4 zum Austausch koaxial von der Antriebswalze 3 in Richtung des Hilfsrahmens 12.2 abzuziehen.

Eine neue Antriebsrolle 4 lässt sich dann in umgekehrter Weise wieder auf die Antriebswalze 3 koaxial aufschieben, wonach anschliessend lediglich die Lageraufnahme 15 wieder stirnseitig vor die Antriebsrolle 4 verschwenkt wird und die Antriebsrolle 4 und/oder die Antriebswalze 3 mittels der Haltewelle 17 mit dem Hilfsrahmen 12.2 und somit mit dem Lagerelement 14 und dessen Lageraufnahme 15 verbunden wird/werden.

Auch hier erfolgt ein sehr schneller Wechsel der Antriebsrolle 4 von der Antriebswalze 3, ohne die Vorrichtung R₂ vollständig auszutauschen oder zu demontieren.

## Patentansprüche

1. Vorrichtung zum Transportieren von Frachtgut, insbesondere von Frachtcontainer in Frachträumen von Flugzeugen, insbesondere Power Drive Unit (PDU) mit einer in einem Rahmen (1) gelagerten Antriebswalze (3),
**dadurch gekennzeichnet,**
**dass** die zumindest eine Antriebswalze (3) mit aufgesetzter Antriebsrolle (4) zum Wechsel der Antriebsrolle (4), gegenüber dem Rahmen (1) verschwenkbar gelagert ist,
- wobei die Antriebsrolle (4) koaxial auf der Antriebswalze (3) verdrehfest aufsitzt und endseits ein Lagerelement (9) aufweist, welches in ein entsprechendes Auflager (11) eines seitlichen Rahmenteiles (5.2) eingreift,
- wobei die Antriebsrolle (4) koaxial bei herausgeschwenkter bzw. herausgeklappter Antriebswalze (3) von dieser axial abziehbar ist.

2. Vorrichtung nach Anspruch 1, **dadurch gekennzeichnet, dass** die Antriebsrolle (4) in einem seitlichen Rahmenteil (5.1) klappbar und in einem gegenüberliegenden seitlichen Rahmenteil (5.2) in einer Lagermulde (10) wiederlösbar gelagert ist.

3. Vorrichtung nach Anspruch 2, **dadurch gekennzeichnet, dass** endseits der Antriebsrolle (4) ein Lagerelement (9) vorgesehen ist, welches passgenau in die Lagermulde (10) eingreift, wobei die Lagermulde (10) halbschalenartig ausgebildet und nach oben geöffnet ist.

4. Vorrichtung nach wenigstens einem der Ansprüche 1 bis 3, **dadurch gekennzeichnet, dass** die Antriebswalze (3) mit dem seitlichen Rahmenteil (5.1) verschwenkbar gelagert ist und die Antriebsrolle (4) mit dem anderen seitlichen Rahmenteil (5.2) des Rahmens (1) rotativ bewegbar im Auflager (11) gelagert ist.

5. Vorrichtung zum Transportieren von Frachtgut, insbesondere von Frachtcontainer in Frachträumen von Flugzeugen, insbesondere Power Drive Unit (PDU) mit einer in einem Rahmen (1) gelagerten Antriebswalze (3), **dadurch gekennzeichnet, dass** die zumindest eine Antriebswalze (3) mit koaxial aufgesetzter Antriebsrolle (4) zum Wechsel der Antriebsrolle (4) mittels eines Hilfsrahmens (12.1, 12.2) aus einem Rahmen herausschwenkbar ist,
- wobei die Antriebswalze (3) einends an einem seitlichen Hilfsrahmen (12.1) fest und rotativ gelagert ist,
- wobei endseits die Antriebsrolle (4) an einem weiteren seitlichen Hilfsrahmen (12.2) rotativ gelagert ist,
- wobei die Antriebsrolle (4) koaxial die Antriebswalze (3) übergreift und verdrehfest mit der Antriebswalze (3) verbunden ist und endseits im seitlichen Hilfsrahmen (12.2) gelagert ist,
- wobei beim koaxialen Abziehen der Antriebsrolle (4) von der Antriebswalze (3) eine Lageraufnahme (15) mit Lagerelement (14) am Hilfsrahmen (12.2) verschwenkbar, insbesondere aus dem axialen Bereich der Antriebsrolle (4) wegklappbar ist.

6. Vorrichtung nach Anspruch 5, **dadurch gekennzeichnet, dass** die Antriebswalze (3) eine integrierte Einheit, bestehend aus elektrischem Antrieb und/oder Getriebe, aufweist.

7. Vorrichtung nach wenigstens einem der Ansprüche 5 oder 6, **dadurch gekennzeichnet, dass** die Lageraufnahme (15) am seitlichen Hilfsrahmen (12.2) vorgesehen ist, wobei über ein aussermittiges Gelenk (16) ein Herausschwenken der Lageraufnahme 15 mit eingesetztem Lagerelement (14) aus dem stirnseitigen Wirkbereich der Antriebsrolle (4) möglich ist.

8. Vorrichtung nach wenigstens einem der Ansprüche 1 bis 7, **dadurch gekennzeichnet, dass** auf die Antriebswalze (3) koaxial eine Antriebsrolle (4) wiederlösbar und verdrehfest aufgesetzt ist.

## Claims

1. Device for transporting freight, in particular freight containers in the freight compartments of aircraft, in particular a power drive unit (PDU) having a drive roller (3) mounted in a frame (1), **characterised in that** the at least one drive roller (3) having a drive roll (4) placed thereon is mounted such that it can be pivoted relative to the frame (1) for replacement of the drive roll (4),
- the drive roll (4) resting in a rotationally fixed manner on the drive roller (3), being coaxial therewith and comprising on its end face a bearing element (9) which engages in a corresponding support (11) of a lateral frame part (5.2),
- the drive roll (4), being coaxial with the drive roller (3) when the drive roller is pivoted or swung out, and being axially removable from said drive roller.

2. Device according to claim 1, **characterised in that** the drive roll (4) can be mounted in a hinged manner in a lateral frame part (5.1) and can be mounted in a releasable manner in a bearing recess (10) in an opposing lateral frame part (5.2).

3. Device according to claim 2, **characterised in that** a bearing element (9) which engages precisely in the bearing recess (10) is provided on the end face of the drive roll (4), the bearing recess (10) being in the form of an upwardly open half shell.

4. Device according to at least one of claims 1 to 3, **characterised in that** the drive roller (3) is pivotally mounted by means of the lateral frame part (5.1) and the drive roll (4) is rotatably mounted in the support (11) by means of the other lateral frame part (5.2) of the frame (1).

5. Device for transporting freight, in particular freight containers in the freight compartments of aircraft, in particular a power drive unit (PDU) having a drive roller (3) mounted in a frame (1), **characterised in that** the at least one drive roller (3), having a drive roll (4) placed coaxially thereon, can be pivoted out of a frame by means of an auxiliary frame (12.1, 12.2) for replacement of the drive roll (4),
- one end of the drive roller (3) being rigidly and rotatably mounted on a lateral auxiliary frame (12.1),
- the end of the drive roll (4) being rotatably mounted on a further lateral auxiliary frame (12.2),
- the drive roll (4) overlapping the drive roller (3) in a coaxial manner and being rotationally engaged with the drive roller (3) and the end of the drive roll being mounted in the lateral auxiliary frame (12.2),
- it being possible to pivot on the auxiliary frame (12.2) a bearing seat (15) having a bearing element (14), in particular to swing it out of the axial region of the drive roll (4), when the drive roll (4) is coaxially removed from the drive roller (3).

6. Device according to claim 5, **characterised in that** the drive roller (3) comprises an integrated unit consisting of an electric drive and/or a transmission means.

7. Device according to at least one of claims 5 or 6, **characterised in that** the bearing seat is provided (15) on the lateral auxiliary frame (12.2), it being possible to pivot the bearing seat (15), having a bearing element (14) inserted therein, out of the end-face operating region of the drive roll (4) via an eccentric articulation (16).

8. Device according to at least one of claims 1 to 7, **characterised in that** a drive roll (4) is placed coaxially on the drive roller (3) in a releasable and rotationally fixed manner.

## Revendications

1. Dispositif de transport de fret, en particulier de conteneurs à fret dans les soutes à fret d'avions, en particulier Power Drive Unit (PDU), avec un cylindre d'entraînement (3) disposé dans un cadre (1),
**caractérisé par le fait**
**qu'**au moins l'un cylindre d'entraînement (3) à rouleau d'entraînement (4) placé pour échange du rouleau d'entraînement (4) est monté de manière pivotable par rapport au cadre (1),
- le rouleau d'entraînement (4) étant placé coaxialement fixe en rotation sur le cylindre d'entraînement (3) et présentant, du côté de l'extrémité, un élément de montage (9) qui s'engage dans un appui (11) correspondant d'une partie latérale du cadre (5.2),
- le rouleau d'entraînement (4) pouvant être retiré axialement et coaxialement, à cylindre d'entraînement (3) pivoté, respectivement, rabattu vers l'extérieur, de ce dernier.

2. Dispositif selon la revendication 1, **caractérisé par le fait que** le rouleau d'entraînement (4) est monté de manière amovible dans une auge de montage (10), repliable dans une partie latérale du cadre (5.1) et dans une partie latérale opposée du cadre (5.2).

3. Dispositif selon la revendication 2, **caractérisé par le fait que** du côté d'extrémité du rouleau d'entraînement (4) est prévu un élément de montage (9) qui s'engage en liaison de forme dans l'auge de montage (10), l'auge de montage (10) étant réalisé en forme de demi-coquille et ouverte vers le haut.

4. Dispositif selon au moins l'une des revendication 1 à 3, **caractérisé par le fait que** le cylindre d'entraînement (3) est monté de manière pivotable avec la partie latérale du cadre (5.1) et que le rouleau d'entraînement (4) est monté mobile en rotation avec l'autre partie latérale (5.2) du cadre (1) dans l'appui (11).

5. Dispositif de transport de fret, en particulier de conteneurs à fret dans des soutes à fret d'avions, en particulier Power Drive Unit (PDU), avec un cylindre d'entraînement (3) disposé dans un cadre (1), **caractérisé par le fait qu'**au moins l'un cylindre d'entraînement (3) à rouleau d'entraînement (4) placé coaxialement pour échange du rouleau d'entraînement (4) peut être pivoté hors d'un cadre à l'aide d'un cadre auxiliaire (12.1, 12.2),
- le cylindre d'entraînement (3) étant, à une extrémité, monté fixe et libre en rotation à un cadre auxiliaire latéral (12.1),
- le rouleau d'entraînement (4) étant, à une extrémité, monté libre en rotation à un autre cadre auxiliaire latéral (12.2),
- le rouleau d'entraînement (4) venant coaxialement en prise par-dessus le cylindre d'entraînement (3) et étant connecté fixe en rotation au cylindre d'entraînement (3) et monté à une extrémité dans le cadre auxiliaire latéral (12.2),
- lors du retrait coaxial du rouleau d'entraînement (4) du cylindre d'entraînement (3), un dispositif de réception de palier (15) à élément de montage (14) étant pivotable par rapport au cadre auxiliaire (1.2.2), en particulier repliable hors de la zone axiale du rouleau d'entraînement (4).

6. Dispositif selon la revendication 5, **caractérisé par le fait que** le cylindre d'entraînement (3) présente une unité intégrée composée d'un entraînement électrique et/ou engrenage.

7. Dispositif selon au moins l'une des revendications 5 ou 6, **caractérisé par le fait que** le dispositif de montage de palier (15) est prévu sur le cadre auxiliaire latéral (12.2), par une articulation excentrée (16) étant possible un pivotement du dispositif de montage de palier (15) à élément d'appui (14) placé hors de la zone active frontale du rouleau d'entraînement (4).

8. Dispositif selon au moins l'une des revendications 1 à 7, **caractérisé par le fait que** sur le cylindre d'entraînement (3) est placé de manière amovible et fixe en rotation coaxialement un rouleau d'entraînement (4).
